# EUROPÄISCHE PATENTSCHRIFT

(11) **EP 3 063 846 B1**
(45) Veröffentlichungstag und Bekanntmachung des Hinweises auf die Patenterteilung: **23.05.2018**
(21) Anmeldenummer: 14758287.8
(22) Anmeldetag: 25.07.2014
(51) Int. Cl.: H01T 13/32, H01T 13/36, H01T 13/46, H01T 13/54, F02B 19/12

(54) **VORKAMMERZÜNDKERZE**
PRECHAMBER SPARK PLUG
BOUGIE D'ALLUMAGE DE CHAMBRE DE PRÉCOMBUSTION

(30) Priorität: 29.10.2013 DE 102013221963
(43) Veröffentlichungstag der Anmeldung: 07.09.2016
(73) Patentinhaber: DKT Verwaltungs-GmbH, 74889 Sinsheim (DE)
(72) Erfinder: MAUL, Georg, 88410 Bad Wurzach (DE); KUHNERT, Steffen, 69126 Heidelberg (DE)
(74) Vertreter: Patent- und Rechtsanwälte Ullrich & Naumann
(86) Internationale Anmeldenummer: PCT/DE2014/200355
(87) Internationale Veröffentlichungsnummer: WO 2015/062588

(56) Entgegenhaltungen:
- EP-A2- 2 413 442
- DE-A1- 2 503 983
- DE-A1- 3 148 296
- DE-U1- 8 808 250
- US-A- 4 926 818
- US-A1- 2005 268 882

## Beschreibung

Die vorliegende Erfindung betrifft eine Vorkammerzündkerze zur Zündung eines Kraftstoff-Luft-Gemisches in einem Verbrennungsmotor, insbesondere einem Gasmotor, mit einem Zündkerzenkörper, der ein Vorkammergehäuse und eine die Vorkammer zumindest teilweise verschließende Kappe aufweist, mit mindestens einer Masseelektrode und einer dagegen isolierten und in die Vorkammer hineinragenden Mittenelektrode, wobei die Masseelektrode als ein in einem Durchgang, vorzugsweise einer Bohrung des Zündkerzenkörpers einschweißbarer, im Wesentlichen kreiszylindrischer Stift ausgebildet ist.

Vorkammerzündkerzen der in Rede stehenden Art sind aus der Praxis bekannt. Bei Vorkammerzündkerzen handelt es sich um spezielle Zündkerzen für Verbrennungsmotoren, die nach dem Prinzip der Magerverbrennung arbeiten. Vorkammerzündkerzen weisen eine Vorkammer auf, die durch Übertrittsöffnungen mit dem Brennraum eines Verbrennungsmotors zusammenwirkt. Das Kraftstoff-LuftGemisch wird mittels Zündfunken in der Vorkammer gezündet, wonach sich die Verbrennung in Form von Zündfackeln durch die Übertrittsöffnungen in den Brennraum des Verbrennungsmotors fortsetzt und dort das tendenziell zündunwillige magere Gemisch entzündet.

Eine Vorkammerzündkerze ist bspw. aus der WO 2007/092972 A1 bekannt. Diese Zündkerze weist eine mit einer Vorkammerwandung 2 und einer Deckelfläche 8 versehene Vorkammer auf. Die Vorkammerwandung 2 weist einen zylinderförmigen Teil 19 auf, an dem mittels rechteckförmigen Masseelektrodenträgern 13 ebenfalls rechteckförmige Masseelektroden 14 befestigt sind. Den Masseelektroden 14 sind rechteckförmige Mittelelektroden 12 zugeordnet, die an einem zentralen Mittelelektrodenträger 11 befestigt sind. Damit sind mehrere Zündflächenpaare geschaffen, mit denen eine bezüglich der Vorkammer möglichst zentrale Zündung erfolgen soll.

Allerdings ist bei der bekannten Vorkammerzündkerze problematisch, dass diese einen aufwändigen Aufbau aufweist. Zunächst ist eine Vielzahl von Einzelteilen zu fertigen, die zur Bereitstellung einer entsprechenden Vorkammerzündkerze zudem miteinander zu fügen sind. Hinzu kommt, dass die Einzelteile der Vorkammerzündkerze eine hohe Fertigungskomplexität aufweisen. Hinsichtlich der Zündung ist ferner von Nachteil, dass diese auf Grund der großflächigen Zündbereiche nicht hinreichend konzentriert erfolgt, wobei die Zündung an einem Zündflächenpaar an unterschiedlichen Stellen stattfinden kann. Auch ein lichtbogenartiges "Hin- und Herlaufen" des Zündfunkens an einem Zündflächenpaar kann dabei auftreten.

Weiterhin zeigen die Dokumente DE 31 48 296 A1, US 4 926 818 A, US 2005/268882 A1 und EP 2 413 442 A2 jeweils Zündkerzen bzw. Vorkammerzündkerzen.

In der DE 88 08 250 U1 ist eine Vorkammerzündkerze beschrieben, bei der die Masseelektrode als kreizylinderischer Stift ausgebildet und in einem Durchgang des Zündkerzenkörpers angeordnet ist.

Der vorliegenden Erfindung liegt nunmehr die Aufgabe zugrunde, eine Vorkammerzündkerze der eingangs genannten Art derart auszugestalten und weiterzubilden, dass mit einfachen konstruktiven Mitteln vorteilhafte Zündeigenschaften ermöglicht sind.

Erfindungsgemäß wird die voranstehende Aufgabe durch die Merkmale des Anspruchs 1 gelöst. Danach ist die in Rede stehende Vorkammerzündkerze derart ausgestaltet und weitergebildet, dass die Mittelelektrode und der mit der Mittelelektrode korrespondierende Stift in radialer Richtung der Mittelelektrode fluchtend angeordnet sind und dass im Stift im an die Mittelelektrode angrenzenden Bereich eine Ausnehmung ausgebildet ist.

Die Fertigung einer Vorkammerzündkerze wird ganz erheblich vereinfacht, wenn die mindestens eine Masseelektrode in Form eines zylindrischen Stiftes, und zwar eines im Wesentlichen kreiszylindrischen Stiftes, ausgebildet ist. Dieser kann auf einfache Weise in einem entsprechenden Durchgang, bei der es sich um eine Bohrung handeln kann, im Zündkerzenkörper positioniert werden. Zur Befestigung des Stiftes ist dieser einschweißbar. Durch die Ausgestaltung in Form eines Durchganges ist eine Zugänglichkeit "von außen", d.h. von der äußeren Gestalt des Zündkerzenkörpers gegeben. Der Stift kann somit nicht nur von außen in den Durchgang oder die Bohrung eingebracht, sondern auch von außen verschweißt werden. Dies kann mit einem heute üblichen Schweißverfahren, wie z.B. WIG-, Plasma- oder Laserschweißverfahren erfolgen, wobei dadurch eine einfache und schnelle Befestigung realisiert ist. In diesem Zusammenhang ist für eine gezielte Verschweißung auch eine Punktverschweißung denkbar. Der Stift ist im montierten Zustand in dem Durchgang oder der Bohrung in den Zündkerzenkörper eingeschweißt.

Mit der erfindungsgemäßen Vorkammerzündkerze ist eine Vorkammerzündkerze angegeben, bei der mit einfachen konstruktiven Mitteln vorteilhafte Zündeigenschaften gewährleistet sind.

Im Hinblick auf das Vorkammergehäuse ist denkbar, dass dieses aus Stahl gefertigt ist. Ferner kann am Außenumfang des Vorkammergehäuses ein Außengewinde zur Befestigung der Vorkammerzündkerze in einem korrespondierenden Zündkerzengewinde eines Verbrennungsmotors ausgebildet sein. In das Vorkammergehäuse kann ein Isolator, bspw. ein Keramikisolator, eingesetzt sein, der die Mittelelektrode von der Massenelektrode isoliert. Hinsichtlich der Kappe ist denkbar, dass diese aus Nickel ausgebildet ist.

Im Konkreten kann der Durchgang oder die Bohrung im Vorkammergehäuse ausgebildet sein. Mit anderen Worten kann der als Masseelektrode arbeitende Stift dem Vorkammergehäuse zugeordnet sein. Im Rahmen einer solchen Ausgestaltung ist der Stift in einem Durchgang oder Bohrung im Vorkammergehäuse verschweißt. Dies ist mit einem heute üblichen Schweißverfahren, wie z.B. einem WIG-, Plasma- oder Laserschweißverfahren möglich, womit der Stift an dem Vorkammergehäuse befestigbar ist. In diesem Zusammenhang kann auch eine Punktverschweißung durchgeführt werden. Anschließend kann ein Schleifen der Schweißung oder des Schweißpunktes erfolgen, so dass bspw. ein Außengewinde des Vorkammergehäuses nicht beeinträchtigt ist. Der Stift kann derart in das Vorkammergehäuse montiert sein, dass dieser aus der inneren Umfangsfläche des Vorkammergehäuses herausragt, um nämlich eine versetzt von der Wand stattfindende Zündung zu erreichen. Dies führt zu einem höheren Wirkungsgrad in der Verbrennung, da sich die Flamme räumlich weitgehend frei bewegen und damit schneller ausbreiten kann. Es erfolgt weniger Flammenlöschung an der Wand.

Im Rahmen einer alternativen Ausgestaltung ist denkbar, dass der Durchgang oder die Bohrung in der Kappe, insbesondere in einem Zylindermantel der Kappe, ausgebildet ist. Mit anderen Worten kann der als Masseelektrode arbeitende Stift der Kappe zugeordnet sein. Im Konkreten ist der Stift in einen Durchgang oder eine Bohrung in der Kappe eingeschweißt. Dies ist auch hier mit einem heute üblichen Schweißverfahren, wie z.B. einem WIG-, Plasma- oder Laserschweißverfahren möglich, womit der Stift an der Kappe oder dem Zylindermantel der Kappe befestigbar ist. In diesem Zusammenhang kann auch eine Punktverschweißung durchgeführt werden. Anschließend kann zum Herstellen einer glatten Oberfläche ein Schleifen der Schweißung oder des Schweißpunktes erfolgen. Im Hinblick auf die Kappe ist denkbar, dass diese eine büchsenartige Form mit einem am offenen Ende der Kappe umlaufenden Bund aufweist, der im zusammengesetzten Zustand mit der inneren Umfangsfläche des Vorkammergehäuses korrespondiert. Das Vorkammergehäuse ist, jedenfalls weitestgehend, rotationssymmetrisch ausgestaltet. Im Hinblick auf die Positionierung des Stiftes in der Kappe ist denkbar, dass der Stift derart im Zylindermantel eingeschweißt ist, dass sich eine bzgl. der inneren Umfangsfläche der Kappe weitestgehend ebene oder bündige Oberfläche ergibt. Ein hoher Wirkungsgrad in der Verbrennung wird hier ebenfalls erreicht, da aufgrund des reduzierten Innendurchmessers der Kappe eine bzgl. der Längsachse der Vorkammerzündkerze zentrumsnahe Anordnung realisiert ist. Eine räumlich weitgehend freie Flammenausbreitung mit hoher Schnelligkeit und eine zugleich geringe Flammenlöschung an der Wand werden erreicht.

Der Stift kann an der der Vorkammer zugewandten Seite ein Plättchen, eine Ronde oder eine Kugel aus Edelmetall aufweisen. Dies kann in Form einer Iridium- oder Platinlegierung ausgeführt sein. Durch ein solches Plättchen, eine solche Ronde oder eine solche Kugel wird ein geringer Verschleiß und eine hohe Standzeit der Masseelektrode erreicht. Das Plättchen, die Ronde oder die Kugel kann an dem Stift verschweißt sein. Ferner kann das Plättchen, die Ronde oder die Kugel in der Form dem Stift entsprechen und kreisförmig ausgebildet sein. Die Kugel kann im Durchmesser an den Stift angepasst sein. Hinsichtlich der Abmessungen ist denkbar, dass das Plättchen oder die Ronde zur Vermeidung von Beschädigungen bei der Montage einen geringeren Durchmesser als der Stift aufweist. Dabei ist bspw. ein gegenüber dem Stift um 0,1 Millimeter geringerer Durchmesser des Plättchens oder der Ronde von Vorteil. Ein gegenüber dem Stift um 0,1 Millimeter reduzierter Durchmesser ist auch im Falle einer Kugel von Vorteil. Der Stift selbst kann aus Nickel, Stahl oder einer Nickellegierung ausgebildet sein.

Im Konkreten kann der Stift in radialer Richtung der Vorkammer derart positioniert sein, dass sich mit der Innenfläche der Vorkammer eine weitestgehend bündige Oberfläche ergibt oder dass der Stift um maximal 75 Prozent des Innenradius der Vorkammer in die Vorkammer hineinragt. Auch ein Hineinragen des Stiftes von maximal 50 Prozent des Innenradius der Vorkammer ist denkbar. Mit anderen Worten kann eine wandnahe Anordnung realisiert sein, in der der Stift oder dessen Ronde, Plättchen oder Kugel eine bündige Oberfläche mit der Innenwand der Vorkammer bilden. Auch die - später noch beschriebene - Zündstrecke kann bei einer solchen Ausgestaltung wandnah angeordnet sein. Eine solche Anordnung ist insbesondere dann von Vorteil, wenn der Stift der - die Vorkammer zumindest teilweisen verschließenden - Kappe zugeordnet ist. Alternativ zu einer wandnahen Anordnung ist auch eine Anordnung denkbar, in der der Stift um maximal 75 Prozent des Innenradius der Vorkammer in die Vorkammer hineinragt. Mit anderen Worten kann eine wandferne Anordnung realisiert sein, in der der Stift oder dessen Ronde, Plättchen oder Kugel um bis zu 75 Prozent des Innenradius der Vorkammer in die Vorkammer hineinragt. Eine solche Anordnung ist insbesondere dann von Vorteil, wenn der Stift unmittelbar dem Vorkammergehäuse zugeordnet ist, da sich hiermit eine zentrale Zündung des Brennstoffgemisches erreichen lässt. Auch die - später noch beschriebene - Zündstrecke kann bei einer solchen Ausgestaltung wandfern angeordnet sein. Der angegebene Innenradius kann sich dann auf die Ausnehmung im Vorkammergehäuse beziehen.

Im Hinblick auf die Anzahl der Masseelektroden ist denkbar, dass mehrere in Durchgängen oder Bohrungen eingebrachte Stifte als Masseelektroden vorgesehen sind. Denkbar sind zwei bis sechs Stifte. Aufgrund der Ausgestaltung mehrerer Elektrodenpaarungen, d.h. einer Paarung von Mittelelektrode und Masseelektrode, kann eine zuverlässige Zündung erfolgen, selbst wenn ein Elektrodenpaar verunreinigt ist.

Im Konkreten kann jeder Masseelektrode eine mit dieser korrespondierenden Mittelelektrode zugeordnet sein. Wie voranstehend bereits angedeutet, werden auf diesem Wege mehrere Elektrodenpaarungen, d.h. eine Paarung einer Masseelektrode mit einer Mittelelektrode, verwirklicht. Dabei sind Masseelektrode und Mittelelektrode einander unmittelbar zugeordnet. Die Mittelelektrode ist derart ausgeführt, dass zu den Enden der Mittelelektrode hin der Elektrodenabstand abnimmt. Als minimaler Elektrodenabstand sind 0,1 bis 0,5 Millimeter für die Bildung eines starken Zündfunkens von Vorteil.

Im Hinblick auf die konkrete Ausgestaltung der Mittelelektrode kann diese kreuzförmig mit mindestens drei Armen ausgebildet sein. Eine Ausgestaltung mit vier oder sechs Armen ist ebenfalls denkbar. Die Armen können sich dabei ausgehend von einem Mittelpunkt in radialer Richtung erstrecken. Die Enden der Arme können bogenförmig gekrümmt sein und sich an die Masseelektrode annähern, wie voranstehend erläutert.

Im Rahmen einer alternativen Ausgestaltung kann die Mittelelektrode in Form eines Streifens mit gekrümmten Enden ausgebildet sein. Hiermit ist eine besonders einfache Herstellung der Mittelelektrode realisiert, da der Streifen in einem Stanzvorgang hergestellt werden kann. Anschließend kann der Streifen verformt werden. Im Konkreten können sich die Enden von einem im Wesentlichen rund- oder kreisförmig ausgebildeten Mittelabschnitt beiderseits in radialer Richtung erstrecken. Im Endbereich sind die Enden bogenförmig gekrümmt, um sich allmählich, quasi ähnlich einer Hyperbel, an die Masseelektroden anzunähern. Bei einer solchen Mittelelektrode ist denkbar, dass entsprechend der Anzahl der Enden zwei Stifte als Masseelektroden vorgesehen sind. Im Hinblick auf die Ausgestaltung der Mittelelektrode ist denkbar, dass diese aus einer Iridium- oder Platinlegierung ausgebildet ist.

Für eine robuste Flammenkernbildung können die Mittelelektrode und der mit der Mittelelektrode korrespondierende Stift, der als Masseelektrode wirkt, in der Vorkammer in radialer Richtung überlappen. Zudem können die Mittelelektrode und der damit korrespondierende Stift quer zur radialen Richtung der Mittelelektrode versetzt angeordnet sein. Hierdurch wird eine Funkenstrecke gebildet, die in Strömungsrichtung in der Vorkammer verlaufen kann, d.h. quer zur radialen Richtung der Mittelelektrode oder - anders ausgedrückt - quer zur radialen Richtung der Vorkammer. Durch eine solche Anordnung wird ein Strömungsschatten erreicht, und zwar durch die Anordnung von Stift zur Mittelelektrode. Durch Bildung eines Strömungsschattens wird die Strömungsgeschwindigkeit im Bereich des Zündfunkens reduziert, so dass dort ruhige Strömungsverhältnisse vorherrschen. Hierdurch kann ein robuster Flammenkern gebildet werden. Bei der danach folgenden Flammenausbreitung entsteht bald Kontakt mit der hohen Strömungsgeschwindigkeit außerhalb des Strömungsschattens und es entsteht eine schnelle Flammenausbreitung. Wie voranstehend bereits ausgeführt, wird der Strömungsschatten durch die Anordnung von Stift zur Mittelelektrode erreicht.

In erfindungsgemäßer Weise sind die Mittelelektrode und der mit der Mittelelektrode korrespondierende Stift in radialer Richtung der Mittelelektrode fluchtend angeordnet. Dabei ist im Stift im an die Mittelelektrode angrenzenden Bereich eine Aussparung ausgebildet. Somit wird ein Strömungsschatten erreicht, und zwar durch die Form des Stiftes, nämlich durch die Aussparung. Die Funkenstrecke kann quer zur Strömungsrichtung in der Vorkammer verlaufen, nämlich in radialer Richtung der Mittelelektrode. Mit anderen Worten verläuft die Zündstrecke bezogen auf die Vorkammer in radialer Richtung, d.h. "nach außen". Durch den Strömungsschatten wird die Strömungsgeschwindigkeit am Zündfunken reduziert, so dass ruhige Strömungsverhältnisse entstehen und ein robuster Flammenkern gebildet werden kann. Bei der nach der Flammenkernbildung nachfolgenden Flammenausbreitung entsteht außerhalb des Strömungsschattens bald Kontakt mit der hohen Strömungsgeschwindigkeit und es entsteht eine schnelle Flammenausbreitung. Auch dies trägt zu einer guten Verbrennung bei. Im Rahmen dieser Ausgestaltung ist denkbar, dass die Mittelelektrode und der Stift in radialer Richtung nicht oder nur geringfügig überlappen, so dass eine Funkenstrecke gebildet werden kann.

Zur Strömungsumlenkung kann an der von der Aussparung abgewandten Seite des Stiftes eine Abschrägung ausgebildet sein. Damit erfolgt eine noch zuverlässigere Umlenkung der Strömung. Auch dann, wenn die Mittelelektrode und der Stift in radialer Richtung der Mittelelektrode nicht oder nur minimal überlappen, kann eine stabile Flammenausbreitung gewährleistet werden.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer teilweisen und teilweise geschnittenen Seitenansicht ein Ausführungsbeispiel der erfindungsgemäßen Vorkammerzündkerze,
- Fig. 2: in verschiedenen Ansichten eine Mittelelektrode in Form eines Streifens einer Vorkammerzündkerze gemäß Fig. 1,
- Fig. 3: in einer Seitenansicht ein Stift der erfindungsgemäßen Vorkammerzündkerze gemäß Fig. 1 mit einer Ronde,
- Fig. 4: in schematischer Darstellung eine Anordnung von Mittelelektrode und Masseelektrode der erfindungsgemäßen Vorkammerzündkerze gemäß einem ersten Ausführungsbeispiel,
- Fig. 5: in schematischer Darstellung eine Anordnung von Mittelelektrode und Masseelektrode der erfindungsgemäßen Vorkammerzündkerze gemäß einem zweiten Ausführungsbeispiel und
- Fig. 6: in schematischer Darstellung eine Anordnung von Mittelelektrode und Masseelektrode der erfindungsgemäßen Vorkammerzündkerze gemäß einem dritten Ausführungsbeispiel.

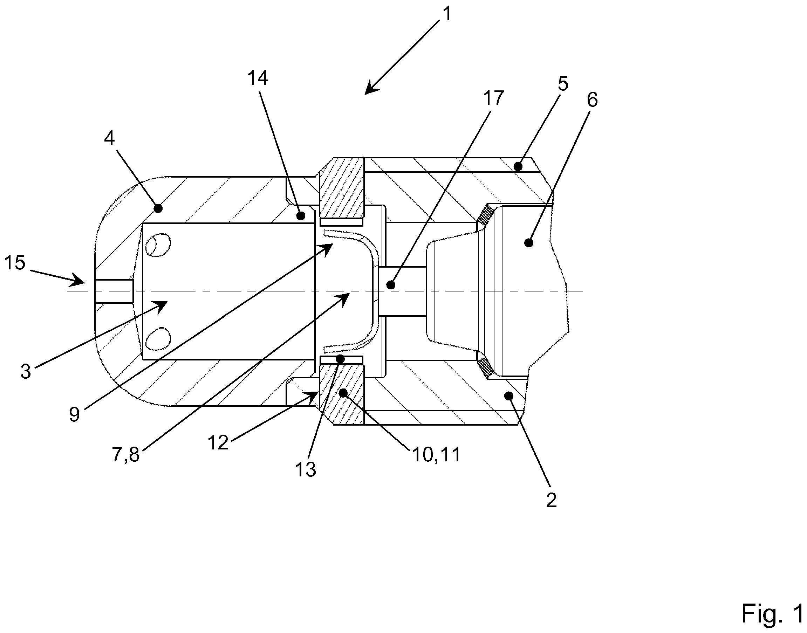

Fig. 1 zeigt in einer teilweisen und teilweise geschnittenen Seitenansicht ein Ausführungsbeispiel der erfindungsgemäßen Vorkammerzündkerze. Die Vorkammerzündkerze weist einen Zündkerzenkörper 1 auf, der ein Vorkammergehäuse 2 sowie eine die Vorkammer 3 zumindest teilweise verschließende Kappe 4 aufweist. Am äußeren Umfang des Vorkammergehäuses 2 ist ein Außengewinde 5 ausgebildet. Der im Vorkammergehäuse 2 aufgenommene Isolator 6, der als Keramikisolator ausgebildet ist, ist ebenfalls teilweise dargestellt.

Die Vorkammerzündkerze weist innerhalb der Vorkammer 3 eine Mittelelektrode 7 auf. Diese ist in Form eines Streifens 8 mit bogenförmig gekrümmten Enden 9 ausgebildet. Der Streifen 8 weist zwei Enden 9 auf, die jeweils als Mittelelektrode 7 wirken. Ferner besteht der Streifen 8 aus einer Iridium- oder Platinlegierung.

Die Vorkammerzündkerze weist entsprechend der Anzahl der Mittelelektroden 7 zwei Masseelektroden 10 auf, die in Form eines kreiszylindrischen Stifts 11 ausgebildet sind. Im vorliegenden Ausführungsbeispiel sind die Stifte 11 in Durchgänge 12 in Form von Bohrungen 12 eingeschweißt. Dies kann unter Anwendung eines üblichen Schweißverfahrens durch Punktverschweißung erfolgen, nämlich durch Setzen eines einzelnen Schweißpunktes. Damit sind die Stifte 11 dem Vorkammergehäuse 2 zugeordnet. An dem der Vorkammer 3 oder der Mittelelektrode 7 zugewandten Ende weisen die Stifte 11 eine angeschweißte Ronde 13 auf. Die Ronde 13 besteht aus Edelmetall, und zwar in Form einer Iridium- oder Platinlegierung.

Die die Vorkammer 3 zumindest teilweise verschließende Kappe 4 ist becherförmig ausgebildet und weist im Kontaktbereich mit dem Vorkammergehäuse 2 einen umlaufenden Bund 14 auf. Zur Ausbreitung der Flammenfront ist am von den Elektroden abgewandten Ende der Kappe 4 eine Öffnung 15 vorgesehen.

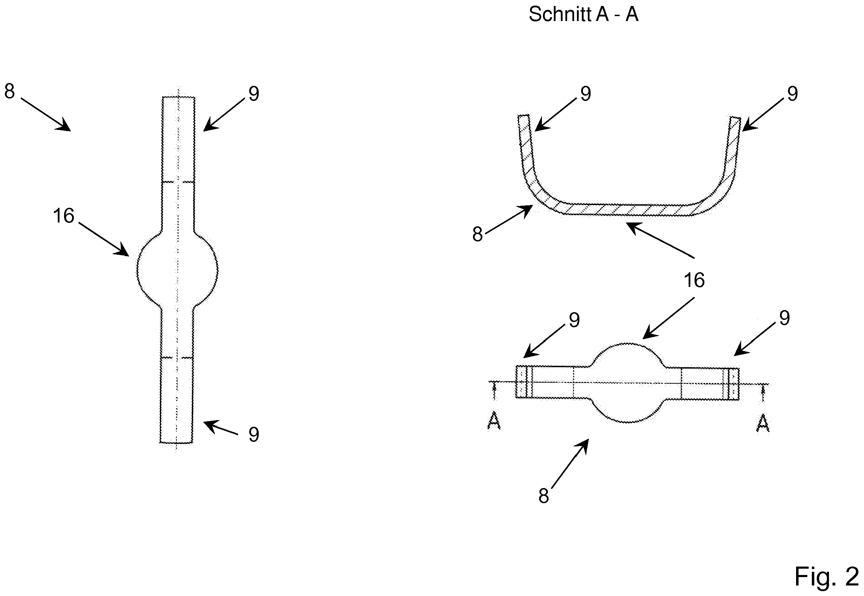

Fig. 2 zeigt in verschiedenen Ansichten eine Mittelelektrode in Form eines Streifens 8 einer Vorkammerzündkerze gemäß Fig. 1. Die linke Darstellung in Fig. 2 zeigt den Streifen 8, wie er bspw. auf einfache Weise bei einem Stanzvorgang hergestellt werden kann. Der Streifen 8 weist einen runden oder kreisförmigen Mittelabschnitt 16 auf, von dem aus sich die beiden Enden 9 in radialer Richtung erstrecken. Die beiden rechten Darstellungen in Fig. 2 zeigen den Streifen 8 in bereits verformtem Zustand, wie er an den aus dem Isolator 6 herausragenden Mittelelektrodenabschnitt 17 angeschweißt wird, wie in Fig. 1 dargestellt. Die bogenförmigen Enden 9 schließen mit dem Mittelabschnitt 16 des Streifens 8 in einbaufertig verformtem Zustand einen Winkel ein, der größer als 90° ist. Als besonders vorteilhaft hat sich in diesem Zusammenhang ein Winkel von 96° +/- 1° herausgestellt.

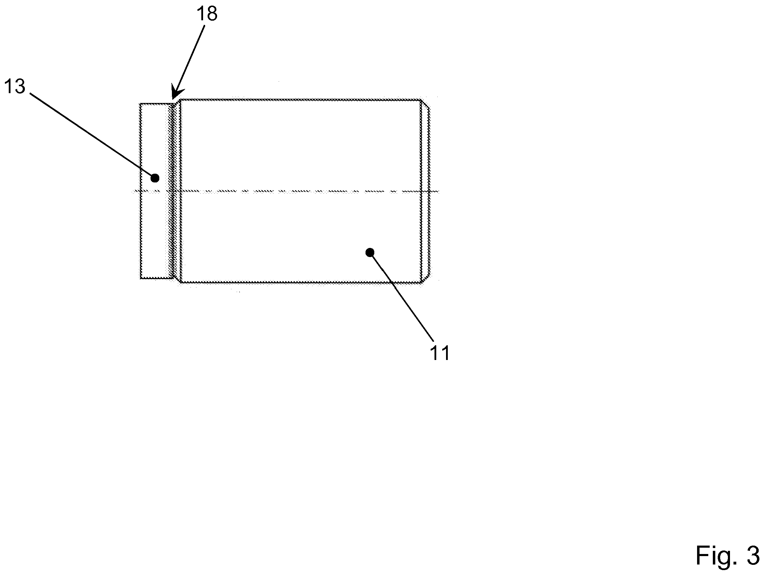

Fig. 3 zeigt in einer Seitenansicht einen Stift 11 der erfindungsgemäßen Vorkammerzündkerze gemäß Fig. 1 mit einer Ronde. Der Stift 11 ist als senkrechter Kreiszylinder ausgebildet. Zudem weist der Stift 11, wie voranstehend bereits ausgeführt, eine an diesen angeschweißte Ronde 13 auf. Diese kann auch als Plättchen 13 bezeichnet werden. Mittels einer Schweißnaht 18 sind der Stift 11 und die Ronde 13 aneinander fixiert. Der Stift 11 kann aus Stahl, Nickel oder einer Nickellegierung bestehen. Die Ronde 13 kann aus einer Iridium- oder einer Platinumlegierung ausgebildet sein.

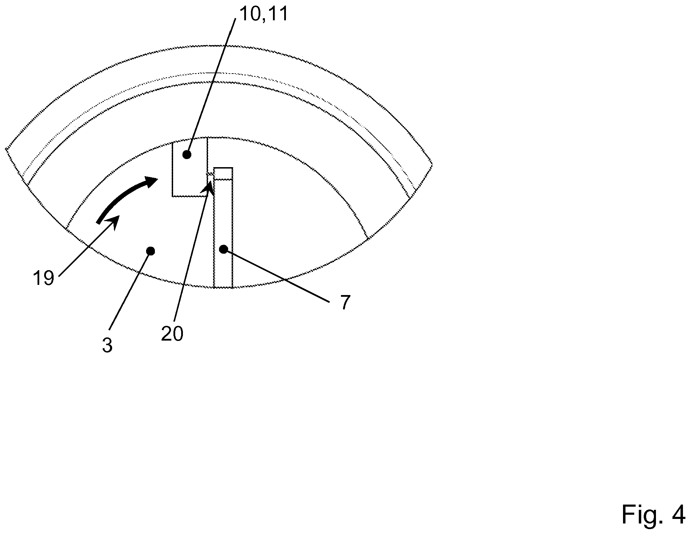

Fig. 4 zeigt in schematischer Darstellung eine Anordnung von Mittelelektrode und Masseelektrode der erfindungsgemäßen Vorkammerzündkerze gemäß einem ersten Ausführungsbeispiel. Dabei sind die Masseelektrode 10, die in Form eines Stifts 11 ausgeführt ist, und die Mittelelektrode 7, bei der es sich um ein Ende 9 des Streifens 8 oder einen Arm einer kreuzförmigen Mittelelektrode handeln kann, versetzt zueinander angeordnet. Die Mittelelektrode 7 und der Stift 11 überlappen sich in radialer Richtung, sind jedoch quer zur radialen Richtung zueinander versetzt angeordnet. Der Pfeil 19 stellt eine innerhalb der Vorkammer 3 vorherrschende Strömungsrichtung dar, die im vorliegenden Ausführungsbeispiel lediglich beispielhaft im Uhrzeigersinn verläuft. Eine davon abweichende Strömungsrichtung, bspw. entgegen dem Uhrzeigersinn, ist ebenfalls denkbar. Die zwischen Mittelelektrode 7 und Stift 11 verlaufende Funkenstrecke 20 ist in Strömungsrichtung orientiert. Der so gebildete Strömungsschatten sorgt für ruhige Strömungsverhältnisse am Zündfunken sowie eine Reduktion der Strömungsgeschwindigkeit im Bereich der Funkenstrecke 20, so dass sich ein robuster Flammenkern bilden kann. Bei anderer Orientierung der Strömungsrichtung, die bspw. in Fig. 4 entgegen dem Uhrzeigersinn verlaufen könnte, wird ebenfalls ein hinreichender Strömungsschatten erreicht.

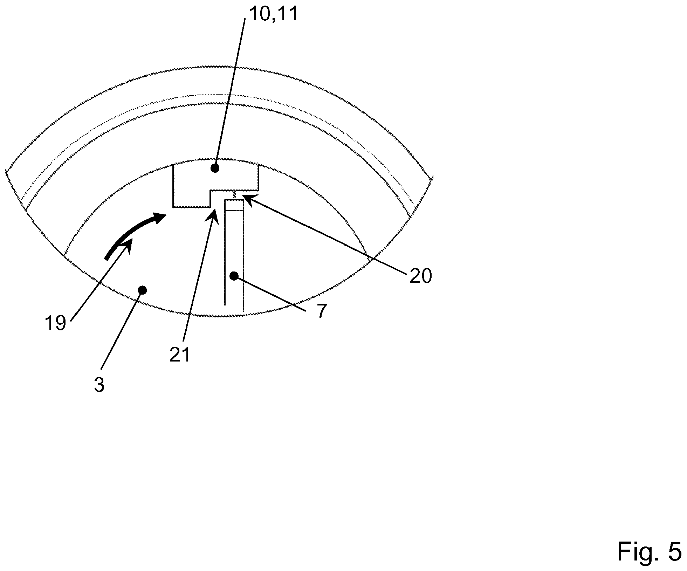

Fig. 5 zeigt in schematischer Darstellung eine Anordnung von Mittelelektrode und Masseelektrode der erfindungsgemäßen Vorkammerzündkerze gemäß einem zweiten Ausführungsbeispiel. Demnach sind die Mittelelektrode 7 und der als Masseelektrode 10 wirkende Stift 11 in radialer Richtung der Vorkammer 3 fluchtend angeordnet. Der Pfeil 19 veranschaulicht abermals die innerhalb der Vorkammer 3 vorherrschende Strömungsrichtung, die lediglich beispielhaft im Uhrzeigersinn verläuft. Zur Bildung eines Strömungsschattens weist der Stift 11 eine besondere Form auf. So ist im Stift 11 im an die Mittelelektrode 7 angrenzenden Bereich eine Ausnehmung 21 ausgebildet. Der Stift 11 und die Mittelelektrode 7 überlappen sich in radialer Richtung nicht, nur geringfügig oder teilweise. Die Funkenstrecke 20 ist in radialer Richtung der Vorkammer ausgerichtet. Durch die Aussparung 21 verläuft die Funkenstrecke im Strömungsschatten, so dass ruhige Strömungsverhältnisse am Zündfunken vorherrschen und die Strömungsgeschwindigkeit reduziert ist. Dies sorgt für eine robuste Flammenkernbildung und trägt zu einer guten Verbrennung bei.

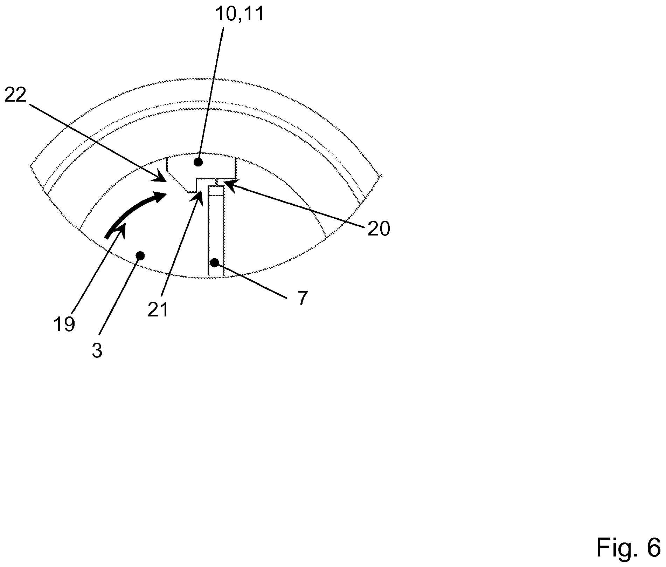

Fig. 6 zeigt in schematischer Darstellung eine Anordnung von Mittelelektrode und Masseelektrode der erfindungsgemäßen Vorkammerzündkerze gemäß einem dritten Ausführungsbeispiel. Das vorliegende Ausführungsbeispiel entspricht weitestgehend dem voranstehend beschriebenen zweiten Ausführungsbeispiel. Insoweit wird zur Vermeidung von Wiederholungen auf das voranstehend beschriebene zweite Ausführungsbeispiel der Elektrodenanordnung verwiesen, bei dem gleiche Komponenten mit gleichen Bezugszeichen versehen sind.
Ergänzend zum voranstehenden Ausführungsbeispiel weist der als Masseelektrode wirkende Stift 11 noch eine Abschrägung 22 auf. Diese trägt zu einer noch besseren Umlenkung der Strömung bei, so dass auch dann, wenn die Mittelelektrode und der Stift 11 in radialer Richtung der Vorkammer 3 nicht oder nur geringfügig überlappen, ein zuverlässiger Strömungsschatten gebildet werden kann. Dies unterstützt die Ausbildung einer guten Verbrennung abermals.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorkammerzündkerze lediglich zur Erörterung der beanspruchten Lehre dienen, diese jedoch nicht auf die Ausführungsbeispiele einschränken.

### Bezugszeichenliste

- 1: Zündkerzenkörper
- 2: Vorkammergehäuse
- 3: Vorkammer
- 4: Kappe
- 5: Außengewinde
- 6: Isolator
- 7: Mittelelektrode
- 8: Streifen
- 9: Enden
- 10: Masseelektrode
- 11: Stift
- 12: Durchgang, Bohrung
- 13: Ronde, Plättchen
- 14: Bund
- 15: Öffnung
- 16: Mittelabschnitt
- 17: Mittelelektrodenabschnitt
- 18: Schweißnaht
- 19: Strömungsrichtung
- 20: Funkenstrecke
- 21: Aussparung
- 22: Abschrägung

## Patentansprüche

1. Vorkammerzündkerze zur Zündung eines Kraftstoff-Luft-Gemisches in einem Verbrennungsmotor, insbesondere einem Gasmotor, mit einem Zündkerzenkörper (1), der ein Vorkammergehäuse (2) und eine die Vorkammer (3) zumindest teilweise verschließende Kappe (4) aufweist, mit mindestens einer Masseelektrode (10) und einer dagegen isolierten und in die Vorkammer hineinragenden Mittelelektrode (7), wobei die Masseelektrode (10) als ein in einem Durchgang (12), vorzugsweise einer Bohrung (12) des Zündkerzenkörpers (1) einschweißbarer, im Wesentlichen kreiszylindrischer Stift (11) ausgebildet ist, und wobei die Mittelelektrode (7) und der mit der Mittelelektrode (7) korrespondierende Stift (11) in radialer Richtung der Mittelelektrode (7) fluchtend angeordnet sind,
**dadurch gekennzeichnet,**
**dass** im Stift (11) im an die Mittelelektrode
(7) angrenzenden Bereich eine Aussparung (21) ausgebildet ist, so dass ein Strömungsschatten erreicht wird, derart, dass durch den Strömungsschatten die Strömungsgeschwindigkeit am Zündfunken reduziert wird.

2. Vorkammerzündkerze nach Anspruch 1, **dadurch gekennzeichnet, dass** der Durchgang (12) oder die Bohrung (12) im Vorkammergehäuse (2) ausgebildet ist oder dass der Durchgang (12) oder die Bohrung (12) in der Kappe (4), insbesondere in einem Zylindermantel der Kappe (4), ausgebildet ist.

3. Vorkammerzündkerze nach Anspruch 1 oder 2, **dadurch gekennzeichnet, dass** der Stift (11) an der der Vorkammer (3) zugewandten Seite ein Plättchen (13), eine Ronde (13) oder eine Kugel aus Edelmetall, insbesondere aus einer Iridium- oder Platinlegierung, aufweist und/oder dass der Stift (11) aus Nickel, Stahl oder einer Nickellegierung ausgebildet ist.

4. Vorkammerzündkerze nach einem der Ansprüche 1 bis 3, **dadurch gekennzeichnet, dass** der Stift (11) in radialer Richtung der Vorkammer (3) derart positioniert ist, dass sich mit der Innenfläche der Vorkammer (3) eine weitestgehend bündige Oberfläche ergibt oder dass der Stift (11) um maximal 75 Prozent des Innenradius der Vorkammer (3) in die Vorkammer (3) hineinragt.

5. Vorkammerzündkerze nach einem der Ansprüche 1 bis 4, **dadurch gekennzeichnet, dass** mehrere in Durchgängen (12) oder Bohrungen (12) eingebrachte Stifte (11), insbesondere zwei bis sechs Stifte (11), als Masseelektroden (10) vorgesehen sind.

6. Vorkammerzündkerze nach einem der Ansprüche 1 bis 5, **dadurch gekennzeichnet, dass** jeder Masseelektrode (10) eine mit dieser korrespondierenden Mittelelektrode (7) zugeordnet ist.

7. Vorkammerzündkerze nach einem der Ansprüche 1 bis 6, **dadurch gekennzeichnet, dass** die Mittelelektrode (7) kreuzförmig mit mindestens drei Armen oder in Form eines Streifens (88) mit gekrümmten Enden (9) ausgebildet ist und/oder dass die Mittelelektrode (7) aus einer Iridium- oder Platinlegierung ausgebildet ist.

8. Vorkammerzündkerze nach einem der Ansprüche 1 bis 7, **dadurch gekennzeichnet, dass** die Mittelektrode (7) und der mit der Mittelelektrode (7) korrespondierende Stift (11) in der Vorkammer (3) in radialer Richtung überlappen.

9. Vorkammerzündkerze nach Anspruch 8, **dadurch gekennzeichnet, dass** zur Strömungsumlenkung an der von der Aussparung (21) abgewandten Seite des Stiftes (11) eine Abschrägung (22) ausgebildet ist.

## Claims

1. Prechamber spark plug for igniting a fuel/air mixture in an internal combustion engine, in particular a gas engine, having a spark plug member (1) which has a prechamber housing (2) and a cap (4) which at least partially closes the prechamber (3), having at least one earth electrode (10) and a centre electrode (7) which is insulated with respect thereto and which protrudes into the prechamber, wherein the earth electrode (10) is constructed as a substantially circular-cylindrical pin (11) which can be welded in a passage (12), preferably a hole (12) of the spark plug member (1),
and wherein the centre electrode (7) and the pin (11) which corresponds to the centre electrode (7) are arranged in alignment in a radial direction of the centre electrode (7), **characterised in that**
a recess (21) is formed in the pin (11) in the region adjacent to the centre electrode (7) so that an ineffective flow region is achieved in such a manner that the flow speed at the ignition spark is reduced as a result of the ineffective flow region.

2. Prechamber spark plug according to claim 1, **characterised in that** the passage (12) or the hole (12) is constructed in the prechamber housing (2) or **in that** the passage (12) or the hole (12) is constructed in the cap (4), in particular in a cylindrical cover of the cap (4).

3. Prechamber spark plug according to claim 1 or 2, **characterised in that** the pin (11) at the side facing the prechamber (3) has a small plate (13), a round blank (13) or a ball of high-grade metal, in particular of an iridium or platinum alloy, and/or **in that** the pin (11) is formed from nickel, steel or a nickel alloy.

4. Prechamber spark plug according to any one of claims 1 to 3, **characterised in that** the pin (11) is positioned in a radial direction of the prechamber (3) in such a manner that a surface which is flush with the inner face of the prechamber (3) to an extremely great extent is produced or **in that** the pin (11) protrudes into the prechamber (3) by a maximum of 75% of the inner radius of the prechamber (3).

5. Prechamber spark plug according to any one of claims 1 to 4, **characterised in that** a plurality of pins (11) which are introduced into passages (12) or holes (12), in particular from two to six pins (11), are provided as earth electrodes (10) .

6. Prechamber spark plug according to any one of claims 1 to 5, **characterised in that** there is associated with each earth electrode (10) a centre electrode (7) corresponding thereto.

7. Prechamber spark plug according to any one of claims 1 to 6, **characterised in that** the centre electrode (7) is constructed to be cruciform having at least three arms or is constructed in the form of a strip (88) with curved ends (9), and/or **in that** the centre electrode (7) is constructed from an iridium or platinum alloy.

8. Prechamber spark plug according to any one of claims 1 to 7, **characterised in that** the centre electrode (7) and the pin (11) which corresponds to the centre electrode (7) overlap in the prechamber (3) in a radial direction.

9. Prechamber spark plug according to claim 8, **characterised in that** a chamfered portion (22) is formed for flow redirection at the side of the pin (11) facing away from the recess (21).

## Revendications

1. Bougie d'allumage de chambre de précombustion pour l'allumage d'un mélange carburant-air dans un moteur à combustion, plus particulièrement un moteur à essence, avec un corps de bougie d'allumage (1), qui comprend un boîtier de chambre de pré-combustion (2) et un clapet (4) obturant au moins partiellement la chambre de pré-combustion (3), avec au moins une électrode de masse (10) et une électrode centrale (7) isolée par rapport à celle-ci et dépassant dans la chambre de pré-combustion, l'électrode de masse (10) étant conçue comme une tige (11) pouvant être soudée dans un passage (12), de préférence un alésage (12) du corps de bougie d'allumage (1), de forme globalement cylindrique, et l'électrode centrale (7) et la tige (11) correspondant à l'électrode centrale (7) étant disposées de manière alignée dans la direction radiale de l'électrode centrale (7),
**caractérisée en ce que**
dans la tige (11), dans la partie adjacente à l'électrode centrale (7), un évidement (21) est réalisé, de façon à obtenir un obstacle à l'écoulement, de façon à ce que l'obstacle à l'écoulement permette de réduire la vitesse d'écoulement au niveau des étincelles.

2. Bougie d'allumage de chambre de précombustion selon la revendication 1, **caractérisée en ce que** le passage (12) ou l'alésage (12) est réalisé dans le boîtier de chambre de précombustion (2) ou **en ce que** le passage (12) ou l'alésage (12) est réalisé dans le clapet (4), plus particulièrement dans une enveloppe cylindrique du clapet (4).

3. Bougie d'allumage de chambre de précombustion selon la revendication 1 ou 2, **caractérisée en ce que** la tige (11) comprend, sur le côté orienté vers la chambre de précombustion (3), une petite plaque (13), un rond (13) ou une sphère en métal noble, plus particulièrement en un alliage d'iridium ou de platine, et/ou **en ce que** la tige (11) est constituée de nickel, d'acier ou d'un alliage de nickel.

4. Bougie d'allumage de chambre de précombustion selon l'une des revendications 1 à 3, **caractérisée en ce que** la tige (11) est positionnée dans la direction radiale de la chambre de précombustion (3) de façon à obtenir, avec la surface interne de la chambre de précombustion (3), une surface largement affleurante ou **en ce que** la tige (11) dépasse dans la chambre de précombustion (3) de 75 % maximum du rayon intérieur de la chambre de précombustion (3).

5. Bougie d'allumage de chambre de précombustion selon l'une des revendications 1 à 4, **caractérisée en ce que** plusieurs tiges (11) insérées dans des passages (12) ou des alésages (12), plus particulièrement deux à six tiges (11), sont prévues en tant qu'électrodes de masse (10).

6. Bougie d'allumage de chambre de précombustion selon l'une des revendications 1 à 5, **caractérisée en ce qu'**à chaque électrode de masse (10) correspond une électrode centrale (7).

7. Bougie d'allumage de chambre de précombustion selon l'une des revendications 1 à 6, **caractérisée en ce que** l'électrode centrale (7) présente la forme d'une croix avec au moins trois bras ou la forme d'une bande (88) avec des extrémités incurvées (9) et/ou **en ce que** l'électrode centrale (7) est constituée d'un alliage d'iridium ou de platine.

8. Bougie d'allumage de chambre de précombustion selon l'une des revendications 1 à 7, **caractérisée en ce que** l'électrode centrale (7) et la tige (11) correspondant à l'électrode centrale (7) se superposent dans la chambre de précombustion (3) dans la direction radiale.

9. Bougie d'allumage de chambre de précombustion selon la revendication 8, **caractérisée en ce que**, pour la déviation de l'écoulement, un chanfrein (22) est réalisé sur le côté de la tige (11) opposé à l'évidement (21).
